# EUROPEAN PATENT APPLICATION

(11) **EP 3 632 220 A1**
(43) Date of publication of application: **08.04.2020**
(21) Application number: 18853417.6
(22) Date of filing: 06.09.2018
(51) Int. Cl.: A23L 27/60, A23L 11/00

(54) **EMULSIFIED SEASONING AND METHOD FOR MANUFACTURING SAME**

(30) Priority: 11.09.2017 JP 2017173830
(71) Applicant: Mizkan Holdings Co., Ltd., Handa-shi, Aichi 475-8585 (JP)
(72) Inventor: SHIBATA, Eri, Handa-shi Aichi 475-8585 (JP)
(74) Representative: Mewburn Ellis LLP
(86) International application number: PCT/JP2018/032954
(87) International publication number: WO 2019/049915

(57) **Abstract**

Provision of emulsified seasoning with improved stability during chilled storage and improved heat resistance, made of beans or nuts having a water content of 50 mass% or less, oil/fat, organic acid and water, and a method for manufacture thereof.

An emulsified seasoning for chilled storage and/or heat-cooking, comprising fine food particles derived from beans or nuts having a water content of 50 mass% or less, oil/fat, organic acid, and water, wherein
(1) a solid content is 10-98 mass%;
(2) a total content of the oil/fat is 10-60 mass%;
(3) a modal diameter is 0.3-100 µm;
(4) a water content is 20-80 mass%; and
(5) a viscosity value measured with a B-type viscometer at 20°C is 4,000 mPa·s or more.

## Description

### Field of the Invention

The present invention relates to an emulsified seasoning and a manufacturing method thereof.

### Background Art

Emulsified seasonings are widely used in daily dining, including mayonnaise, mayonnaise-like seasonings, and dressings. Most of these seasonings, because microorganisms are liable to grow therein, conventionally need chilling for storage. However, in principle, emulsified seasonings tend to cause demulsification by temperature changes; it is known that oils/fats are separated during the chilled storage of about 0 to 4°C, particularly when placed in the vicinity of a blow-off port of cold air in a refrigerator, and therefore storage in an environment of about 4 to 10°C such as in a door pocket, a vegetable compartment was required. Since the emulsified seasonings are not suitable for chilled storage, a side dish bread containing ingredients requiring chilled storage at about 4°C and such emulsified seasonings were not to be subjected to chilled storage, which led to food wastes.

Regarding conventional emulsified seasonings, there have been reported methods (Patent Literature 1) for manufacturing a mayonnaise-like food having freeze resistance by using moist okara (soy pulp) having a particle size of 10 to 200 µm, emulsified foods (Patent Literature 2) prepared by mixing and agitating at least soybean lecithin-containing substances selected from tofu and soybean milk, oils/fats, and thickeners selected from cold plum flour, dust flour and yam potatoes, and oil-in-water emulsified compositions (Patent Literature 3) prepared by containing water-soluble polysaccharides derived from soybean as active ingredients and having a median diameter of the emulsified particles of 5 to 100 µm.

It has also been reported that the resistance to freezing of mayonnaise is enhanced by adding dry egg white of 4% or less (Non-Patent Literature 1).

### Citations

### Patent Literatures

[Patent Literature 1] WO 2002/051262A1
[Patent Literature 2] JP-A-2006-055016
[Patent Literature 3] WO 2005/027648A1

### Non-Patent Literatures

[Non Patent-Literature 1] Journal of the Japanese Society of Food Engineers, Vol. 12, No. 2, pp. 113-115, Sep. 2011

### Summary of the Invention

### Technical Problem

However, Patent Literature 1 relates to a technique using a wet sauce having a microorganism-weak moisture content of 55 weight% to 95 weight%, and does not relate to a technique for suppressing separation of oil water after freezing (-28°C) and thawing, but a technique for improving stability when stored for a long time in a chilled temperature zone (0 to 4°C).

Patent Literature 2 relates to a technique for mixing and stirring at least soybean milk or tofu, oils/fats, and special thickeners such as cold plum flour, michin flour, yam potatoes, etc., and is not a technique for refining raw materials.

Patent Literature 3 requires the use of a special water-soluble polysaccharide extracted from soybeans or soybean-treated products in the acidic range of pH2. 4-3.5 at temperatures above 100°C and has not been widely used.

Non-Patent Literature 1 relates to a technique that enhances resistance to freezing by using dried egg white with a thermal storage condition of 68°C or higher and a water separation rate of 4% or less of its thermal coagulum. The technique requires the use of special dried egg white. The technique also suppresses oil/water separation when the egg white is thawed after storage in freeze (-20 to -30°C). Emulsion breakdown in freezing storage is caused by, for example, loss of fluidity of a dispersoid due to freezing of water and then loss of a dispersant from the dispersoid, whereas in the chilled temperature zone, emulsion breakdown is caused with water being maintained in a liquid state. Therefore, the mechanism of this technique may not be applied to the method that improves stability when the egg white is stored for a long period of time in the chilled temperature zone (0 to 4°C) in the present invention.

In addition, it is known that emulsified seasonings such as mayonnaise have reduced emulsification stability by heating, resulting in oil separation. Especially, in heat-cooking in which a high temperature of 130°C or more is locally applied, oil separation is remarkable, which reduced variety in use of the emulsified seasoning.

It is therefore an object of the present invention to provide an emulsified seasoning prepared by using legumes or seeds, oils/fats, organic acids and water having a water content of 50 mass% or less, wherein emulsion breakdown during chilled storage and/or cooking is prevented and emulsion stabilization is improved.

### Solution to Problem

Therefore, the present inventors investigated various measures for preventing emulsion breakdown of emulsified seasonings during chilled storage and/or cooking and enhancing emulsification stability, and found that legumes or seeds with a water content of 50 mass% or less, and mixtures of oil/fat, organic acid, and water at an optional ratio, could be refined to a specific physical property, thereby significantly enhancing storage resistance and heat resistance in the chilled temperature zone, and completed the present invention.

That is, the present invention relates to the following [1] to [13].
[1] An emulsified seasoning for chilled storage and/or heat-cooking, comprising fine food particles derived from beans or nuts having a water content of 50 mass% or less, an oil/fat, an organic acid, and water, wherein
   (1) a solid content is 10 mass% or more and 98 mass% or less;
   (2) a total content of the oil/fat is 10 mass% or more and 60 mass% or less;
   (3) a modal diameter is 0.3 µm or more and 100 µm or less;
   (4) a water content is 20 mass% or more and 80 mass% or less; and
   (5) a viscosity value measured with a B-type viscometer at 20°C is 4,000 mPa·s or more.
[2] The emulsified seasoning for chilled storage and/or heat-cooking according to [1], further comprising fine particles of vegetables other the beans or nuts.
[3] The emulsified seasoning for chilled storage and/or heat-cooking according to [1] or [2], wherein a content of fine food particles comprising the beans or nuts is 2 mass% or more and 98 mass% or less.
[4] The emulsified seasoning for chilled storage and/or heat-cooking according to any one of [1] to [3], wherein a content of the organic acid is 0.1 mass% or more and 2.0 mass% or less.
[5] The emulsified seasoning for chilled storage and/or heat-cooking according to any one of [1] to [4], comprising 0.1 mass% or more and 20 mass% or less of salt.
[6] The emulsified seasoning for chilled storage and/or heat-cooking according to any one of [1] to [5], wherein the modal diameter is 0.3 µm or more and 50 µm or less.
[7] The emulsified seasoning for chilled storage and/or heat-cooking according to any one of [1] to [6], wherein the water content is 20 mass% or more and 70 mass% or less.
[8] The emulsified seasoning for chilled storage and/or heat-cooking according to any one of [1] to [7], wherein the viscosity value measured with a B-type viscometer at 20°C is 4,000 mPa·s or more and 80,000 mPa·s or less.
[9] The emulsified seasoning for chilled storage and/or heat-cooking according to any one of [1] to [8], being an emulsified seasoning for chilled storage.
[10] A method for manufacturing an emulsified seasoning for chilled storage and/or heat-cooking, the method comprising the steps (a) and (b):
   (a) preparing a liquid mixture containing beans or nuts having a water content of 50 mass% or less, an oil/fat, an organic acid, and water and adjusted to have a solid content of 10 mass% or more and 98 mass% or less, a total content of the oil/fat of 10 mass% or more and 60 mass% or less, and a water content of 20 mass% or more and 80 mass% or less; and
   (b) performing size reduction treatment until the liquid mixture has a modal diameter of 0.3 µm or more and 100 µm or less and a viscosity value of 4,000 mPa·s or more measured with a B-type viscometer at 20°C.
[11] The method for manufacturing an emulsified seasoning for chilled storage and/or heat-cooking according to [10], wherein a majority of the size reduction treatment is performed under a pressurized condition of 0.01 MPa or more.
[12] A method for improving heat resistance and/or stability during chilled storage of an emulsified seasoning, the method comprising the following steps (a) and (b):
   (a) preparing a liquid mixture containing beans or nuts having a water content of 50 mass% or less, an oil/fat, an organic acid, and water and adjusted to have a solid content of 10 mass% or more and 98 mass% or less, a total content of the oil/fat of 10 mass% or more and 60 mass% or less, and a water content of 20 mass% or more and 80 mass% or less; and
   (b) performing size reduction treatment until the liquid mixture has a modal diameter of 0.3 µm or more and 100 µm or less and a viscosity value of 4,000 mPa·s or more measured with a B-type viscometer at 20°C.
[13] The method for improving heat resistance and/or stability during chilled storage of an emulsified seasoning according to [12], wherein a majority of the size reduction treatment is performed under a pressurized condition of 0.01 MPa or more.

### Advantageous Effect of the Invention

The present invention provides an emulsified seasoning for chilled storage and/or for heat-cooking, and a method for the manufacture thereof.

### Detailed Description of the Invention

While examples of the embodiments of the present invention will now be described, the present invention is not limited to these embodiments and any modification can be made without departing from the scope of the present invention.

The present invention provides an emulsified seasoning having improved stability during storage in a chilled temperature zone, i.e., an emulsified seasoning for chilled storage. In the present invention, the term "storage in a chilled temperature zone" refers to a state in which a typical emulsified seasoning is stored at a temperature easily causing demulsification of about 0 to 4°C for about 16 hours.

The term "for heat-cooking" refers to use in cooking in a state to be partially or wholly exposed to a high temperature of about 130°C or more. Demulsification of a typical emulsified seasoning more easily occurs at a higher temperature. Therefore, when a temperature of about 150°C or more is partially or wholly applied, the present invention can be advantageously used, and when a temperature of about 180°C or more is applied, the present invention can be most advantageously used. When the upper limit of the temperature to be partially or wholly applied is about 400°C or less, the present invention can be advantageously used, and when the upper limit of the temperature is about 350°C or less, the present invention can be most advantageously used. The time to be partially or wholly exposed to a high temperature is desirably 2 hours or less, and most desirably 1 hour or less.

The seasoning of the present invention is an emulsified seasoning, i.e., a seasoning present in an emulsified form and is different from an oil-water separated seasoning present in an oil-water separation state and is brought to emulsification before use.

The beans as the raw ingredient of the fine food particles used in the present invention may be any beans or any processed product thereof (including that subjected to pretreatment such as cooking, removal of harshness, peeling, ripening, salting, or peel processed product) that is used for eating and drinking, and particular examples thereof include common bean, kidney bean, red bean, white bean, black bean, pinto bean, tiger bean, lima bean, safflower bean, pea, pigeon pea, green bean, cowpea, azuki bean, fava bean, soybean, green soybean (including "green soybean" harvested in an immature stage together with sheaths and have green appearance (e.g., a hue of 0GY (10Y) to 10BG, a value of 5 or more, and a chroma of 3 or more in the Munsell color system)), chickpea, lentil (lens culinaris or lentil pea), peanut, lupine bean, grass pea, locust bean (carob), Parkia speciose, Parkia biglobosa, coffee bean, cacao bean, and Mexican jumping bean. These beans may be used alone or in combination of two or more thereof. In particular, soybean and green soybean are preferred because of their high stability-imparting effect during chilled storage of the seasoning of the present invention. In addition, a processed product of these beans containing no dietary fibers derived from beans do not sufficiently exhibit the effect of the present invention. Accordingly, a processed product preferably contains dietary fibers (the total amount of dietary fibers is preferably 1 mass% or more, more preferably 2 mass% or more). Note that both edible part and non-edible part of each of the' above-mentioned foodstuffs can be used.

The nuts as the raw ingredient of the fine food particles used in the present invention may be any nuts or any processed product thereof (including those subjected to pretreatment such as cooking, removal of harshness, peeling, ripening, salting, peel processing, or juice extraction) that is used for eating and drinking, and particular examples thereof include almond, cashew nut, pecan, macadamia nut, pistachio, hazelnut, coconut, pine nut, sunflower seed, pumpkin seed, watermelon seed, sweet acorn, walnut, chestnut, ginkgo nut, sesame, and brazil nut. In particular, almond, cashew nut, macadamia nut, pistachio, hazelnut, and coconut can be exemplified. In particular, almond is preferred, and pasted almond (e.g., almond milk) is particularly preferred because of its high stability-imparting effect during chilled storage. Incidentally, each of the above-mentioned foodstuffs can be used regardless of the edible part or the non-edible part thereof. Furthermore, use of a combination of beans and nuts is more preferred because the combination further enhances the stability-imparting effect during chilled storage.

In the present invention, beans or nuts having a water content of 50 mass% or less are used. If the water content is higher than 50 mass%, the effect of improving the stability during chilled storage of the present invention is not exhibited, which is not preferable. From the viewpoint of imparting stability during chilled storage, the water content is preferably 50 mass% or less, more preferably 40 mass% or less, further preferably 30 mass% or less, further preferably 20 mass% or less, and most preferably 10 mass% or less. A preferred method for preparing beans or nuts having a water content of 50 mass% or less is a method using beans or nuts that have been previously subjected to drying treatment. The method for drying beans and nuts may be any method that is commonly used for drying foods, such as sun drying, shade drying, freeze drying, air drying (e.g., hot air drying, fluid bed drying, spray drying, drum drying, or low-temperature drying), pressure drying, reduced-pressure drying, microwave drying, or oil heat drying. Air drying or freeze drying is further preferred because they give little changes in color tone and flavor inherent to foodstuffs and hardly generate smells other than those of the foods.

In addition, roasting treatment of beans and nuts can prepare aromatic beans and nuts while drying them, and such beans and nuts can be suitably used as a seasoning having high palatability.

The emulsified seasoning of the present invention preferably contains vegetables, in addition to bean or nut fine particles, from the viewpoint of stability of the seasoning. It is preferable that these vegetables are contained as fine particles or extract such that the modal diameter of the emulsified seasoning is within a predetermined range described below.

The vegetable may be any vegetable or any processed product thereof (including that subjected to pretreatment such as cooking, removal of harshness, peeling, ripening, salting, or peel processed product) that is used for eating and drinking, and particular examples thereof include Japanese radish, carrot, burdock, rutabaga, beet (especially beetroot), parsnip, turnip, black salsify, lotus root, arrowhead, shallot, garlic, Chinese onion, lily bulb, fawn lily, kale, onion, asparagus, udo, cabbage, lettuce, spinach, Chinese cabbage, rapeseed, mustard spinach, Chinese mustard cabbage, garlic chive, Japanese bunching onion, nozawana, Japanese butterbur, spinach beet (Swiss chard), potherb mustard, tomato, eggplant, pumpkin, bell pepper, cucumber, mioga ginger, cauliflower, broccoli, edible chrysanthemum, bitter gourd, okra, artichoke, zucchini, sugar beet, ginger, perilla, wasabi, paprika, herbs (watercress, coriander, Chinese water spinach, celery, tarragon, chives, chervil, sage, thyme, laurel, parsley, mustard green, mustard (yellow mustard, brown mustard, and white mustard), mioga ginger, mugwort, bazil, oregano, rosemary, peppermint, savory, lemongrass, dill, wasabi leaf, Japanese pepper leaf, and stevia), eastern bracken, osmund, kudzu, tea tree (tea), and bamboo shoot. Although these foodstuffs may be used alone or in combination of two or more thereof, cruciferous plants have an effort of enhancing the delicious and hot taste of a liquid seasoning and are desirable. It is more preferably to use at least one selected from the group consisting of broccoli, cabbage, cauliflower, kale, and mustard (yellow mustard, brown mustard, and white mustard), and it is particularly desirable to use two or more selected from the group consisting of broccoli, cabbage, cauliflower, kale, and mustard (yellow mustard, brown mustard, and white mustard). Incidentally, each of the above-mentioned foodstuffs can be used regardless of whether it is the edible part or the non-edible part thereof.

In addition, using potatoes (such as sweet potato, cassava, yacon, taro, Japanese taro, konjac, tacca (Polynesian arrowroot), potato, purple potato, Canada potato, yam, Japanese yam, and Chinese yam) can enhance the shape retention property and is preferable. The emulsified seasoning of the present invention preferably contains potatoes, in addition to bean or nut fine particles, from the viewpoint of stability of the seasoning. It is preferable that these potatoes are contained as fine particles or extract such that the modal diameter of the emulsified seasoning is within a predetermined range described below. Incidentally, each of the above-mentioned foodstuffs can be used regardless of whether it is the edible part or the non-edible part thereof.

Using mushrooms (such as shiitake mushroom, matsutake mushroom, chrysanthemum mushroom, maitake mushroom, Polyporaceae, hiratake mushroom, eryngii, enokitake mushroom, shimeji mushroom, naratake mushroom, mushroom, nameko mushroom, Suillus bovinus, hatsudake mushroom, and chichitake mushroom) can further enhance the delicious and hot taste and is more preferable. It is preferable that these mushrooms are contained as fine particles or extract such that the modal diameter of the emulsified seasoning is within a predetermined range described below. Incidentally, each of the above-mentioned foodstuffs can be used regardless of whether it is the edible part or the non-edible part thereof.

Using algae can prevent the fine food particles in the seasoning from precipitating and can enhance the stability and is preferable. The algae may be any algae to be used for eating and drinking, for example, macroalgae such as kelps, wakame seaweeds, seaweeds, aonori seaweeds, and tengusa seaweed; and microalgae, such as green algae, red algae, blue-green algae, dinoflagellate, and euglena, and especially, examples thereof include aosa seaweed, green laver, Ulva pertusa, sea grapes (Caulerpa lentillifera), Lychaete ohkuboana, sea grapes (Caulerpa lentillifera), Codium subtubulosum, Cordium minus, Acanthopeltis japonica, Monostroma nitidum, Enteromorpha compressa, Caulerpa okamurae, Ulva intestinalis, Sargassum horneri, Dictyota dichotoma, Eisenia bicyclis, Ecklonia radicosa, Ishige oakmurae, Carpomitra costata, Ishige foliacea, Cassiope lycopodioides, Sargassum thunbergii, Padina arborescens, Sargassum ringgoldianum, Cladosiphon okamuranus, Pyropia tenuipedalis, Hydroclathrus clathratus, Ecklonia cava, Eisenia bicyclis, Scytosiphon lomentaria, Sargassum hormeri, Dictyota coriacea, Petrospongium rugosum, Dictyopteris undulata, Petalonia fascia, Ecklonia stolonifera, Scytosiphon lomentaria, Leathesia disfformis, Sargassum macrocarpum, Petalonia binghamiae, Sargassum fusiforme, Undaria undarioides, Colpomenia sinuosa, Tinocladia crassa, Sargassum fulvellum, Saccharina japonica, Ceratophyllum demersum, Scytosiphon lomentaria, Mutimo cylindricus, Nemacystis decipiens, Chondria crassicaulis, Undaria pinnatifida, Pyropia tenera, Chondrus verrucosus, Bangia fuscopurpurea, Amphiroa zonata, Chondrus yendoi, Gelidium pacficum, Gracilaria vermiculophylla, Gymnogongrus flabelliformis, Pterocladiella tenuis, Grateloupia divaricata, Gracilaria textorii, Dermonema pulvinatum, Phacelocarpus japonicus, Chondrus yendoi, Grateloupia imbricata, Gracilaria parvispora, Pachymeniopsis elliptica, Chondrus giganteus, Gracilariopsis chorda, Grateloupia turuturu, Meristotheca papulosa, Grateloupia crispata, Gloiopeltis furcata, seaweed (Pyropia yezoensis), Gloiopeltis complanata, Besa paradoxa, Dichotomaria falcata, Ptilophora subcostata, Grateloupia livida, Corallina pilulifera, Gloiopeltis furcata, Fushitsunagia catenata, Gelidium elegans, Pyropia suborbiculata, Laurencia okamurae, Euglena, chlorella, Solieria robusta, Grateloupia filicina, Acanthopeltis japonica, Plocamium telfairiae, and Gelidium amansii. Incidentally, each of the above-mentioned foodstuffs can be used regardless of whether it is the edible part or the non-edible part thereof.

Many algae are rich in polysaccharides, and refinement thereof is difficult. Accordingly, algae are more preferably used in a form of an extract, such as soup stock. In addition, as the foodstuffs, dried foods are preferably used.

Using cereals is preferred because control of the viscosity during storage in a chilled temperature zone becomes easy. The cereals are preferably contained in a form of fine particles or an extract such that the modal diameter of the emulsified seasoning is 0.3 µm or more and 100 µm or less.

The cereals may be any cereals or any processed product thereof (including that subjected to pretreatment such as cooking, removal of harshness, peeling, ripening, salting, peel processing, or fermentation) that is used for eating and drinking, and particular examples thereof include corn, rice, wheat, barley, sorghum, oat, triticale, rye, buckwheat, fonio, quinoa, bark, Japanese millet, millet, foxtail millet, giant corn, sugar cane, and amaranth. In particular, use of rice (especially brown rice) is preferred, and a liquefied product (for example, amazake) thereof prepared by treatment by an enzyme, such as koji mold, is particularly preferred because of its excellent effect in emulsion stability during chilled storage. In addition, when rice (especially brown rice, further enzyme-treated liquefied rice) is used as the cereals, the emulsion stability during chilled storage is further enhanced by simultaneously using beans (especially soybean) or nuts (especially almond, further almond milk). Therefore, such a combination is more preferred. Incidentally, each of the above-mentioned foodstuffs can be used regardless of whether it is the edible part or the non-edible part thereof.

The foodstuffs of the above-mentioned beans, vegetables, potatoes, algae, mushrooms, and cereals are preferably dried foods. The quality of the dried foods is preferably such that the water activity of the food (foodstuff) is 0.95 or less from the viewpoint of easily developing viscosity when water is added and broadening the application range and is more preferably 0.9 or less, more preferably 0.8 or less, and further preferably 0.65 or less. When a dried food is used as a foodstuff, the foodstuff is preferably dried in advance. The foodstuff may be dried by any method that is usually used for drying foods, such as a method by sun drying, shade drying, freeze drying, air drying (e.g., hot air drying, fluid bed drying, spray drying, drum drying, or low-temperature drying), pressure drying, reduced-pressure drying, microwave drying, or oil heat drying, and air drying (especially hot air drying) and freeze drying easily adjust the water content regardless of the material and are convenient for industrial mass processing and are further preferable.

The content of the fine food particles including beans and nuts in the emulsified seasoning of the present invention is that of fine food particles in the composition excluding foods and other ingredients having larger particle diameters than 2000 µm (2 mm), which are not suitable for laser diffraction particle size distribution measurement in the present invention. When the composition contains foods and other ingredients larger than 2 mm, for example, the content refers to the mass of a precipitate fraction obtained by sufficiently removing the supernatant separated by centrifugation of the fraction of the composition passed through a 9 mesh sieve (aperture: 2 mm) (in the case of a solid oil/fat, the solid is dissolved by heating, and foods and other ingredients larger than 2 mm are removed as necessary, and centrifugation is then performed to remove the supernatant).

Since a part of oil/fat and water are taken into the precipitate fraction, the total amount of fine food particles refers to the total weight of these ingredients taken into the precipitate fraction and the foods. In order to provide the quality of the emulsified seasoning of the present invention such that a large amount of fine food particles can be easily eaten without giving "crumbly" texture in the mouth and without causing oily taste, the content of fine food particles including beans and nuts is preferably 2 mass% or more, more preferably 8 mass% or more, further preferably 15 mass% or more, and most preferably 30 mass% or more. In addition, the content of fine food particles is preferably 98 mass% or less, further preferably 95 mass% or less, further preferably 85 mass% or less, and most preferably 80 mass% or less, in particular, from the viewpoint of "crumbly" texture. The proportion of the content of beans and nuts to the total content of fine food particles ([the content of fine particles derived from beans and nuts]/[the content of fine food particles]) is preferably 30 mass% or more, further preferably 50 mass% or more, because the emulsion-stabilizing effect is more strongly expressed at such a proportion. Incidentally, the term "crumbly" texture refers to a texture that is difficult to swallow when swallowing a dry and husky powdery food.

Specifically, the content of fine food particles in a composition of the present invention can be measured by, for example, passing an arbitrary amount of the composition through a 9 mesh sieve (tyler mesh), centrifuging the passed fraction at 15000 rpm for 1 minute, sufficiently removing the supernatant, and measuring the weight of the precipitate fraction as the content of the fine food particles in the composition. The residue on the mesh when sieved through 9 mesh is sufficiently left to stand and is then subjected to sieving in such a manner that fine food particles smaller than the aperture of 9 mesh sufficiently pass through the 9 mesh sieve by using a spatula or the like in order not to change the particle size of the composition, and the passed fraction is collected.

The emulsified seasoning of the present invention contains an oil/fat, an organic acid, water, and salt, in addition to the fine food particles.

The content of the organic acid in the emulsified seasoning of the present invention is preferably 0.1 mass% or more, more preferably 0.2 mass% or more, and further preferably 0.3 mass% or more from the viewpoint of enhancing the flavor of the seasoning. In addition, from the viewpoint of worsening the balance of seasoning taste by too large amount of the organic acid, the content is preferably 2.0 mass% or less, more preferably 1.0 mass% or less, and further preferably 0.6 mass% or less. The organic acid may be added in a form of an organic acid or may be added in a form of a food containing the organic acid, as long as a certain amount of organic acid is finally contained in the seasoning. In addition, the organic acid may be the organic acid itself or an organic acid salt. Specific examples of the organic acid include citric acid, acetic acid, tartaric acid, malic acid, gluconic acid, lactic acid, fumaric acid, and succinic acid. Among these organic acids, from the viewpoint of the flavor, acetic acid and citric acid are preferred, and acetic acid is especially preferred. In addition, combination use of acetic acid and citric acid reduces the acid taste in the organic acids and is therefore preferred. Examples of the addition include a method by addition of acetic acid or citric acid itself; a method by addition of acetic acid-containing food and drink, such as rice vinegar, grain vinegar, alcohol vinegar, apple vinegar, wine vinegar (grape vinegar), synthetic vinegar, black vinegar, Chinese vinegar, and balsamic vinegar; a method by addition of citric acid-containing food and drink, such as lemon juice; and a method by combining these methods. Among these methods, in using acetic acid, from the viewpoint of the balance of acid taste of the seasoning, part or the whole of the acetic acid is preferably derived from fruit vinegar. The fruit vinegar is more preferably apple vinegar, balsamic vinegar, or wine vinegar (grape vinegar), and the majority of the acetic acid derived therefrom is preferably derived from these acetic acid-containing foods and drinks. Alternatively, in using citric acid, part or the whole of the citric acid is more preferably derived from fruit juice or fruit or a processed product thereof, and the majority of the citric acid derived therefrom is preferably derived from these citric acid-containing foods and drinks.

The emulsified seasoning of the present invention desirably contains salt. Although the salt may be the salt contained in the foodstuffs of the emulsified seasoning, it is preferred to add purified salt in addition to the foodstuffs because it makes the taste sharp. In the present invention, the weight rate of the total content of salt in the emulsified seasoning (i.e., total salt content including not only the salt mixed at the time of preparing the composition but also the salt contained in the fine food particles and other optional ingredients) with respect to the total amount of the seasoning is preferably 0.1 mass% or more, more preferably 0.2 mass% or more, and further preferably 0.3 mass% or more. In addition, the weight proportion is preferably 20 mass% or less, more preferably 7.0 mass% or less, and further preferably 5.0 mass% or less.

The emulsified seasoning of the present invention contains an oil/fat. Examples of the oil/fat include an edible oil/fat, various fatty acids, and foods made therefrom, and preferred is an edible oil/fat.

Examples of the edible oil/fat include sesame oil, rapeseed oil, soybean oil, palm oil, palm kernel oil, palm mid-fraction (PMF), cottonseed oil, corn oil, sunflower oil, safflower oil, olive oil, linseed oil, rice oil, camellia oil, perilla oil, flavored oil, coconut oil, grape seed oil, peanut oil, almond oil, avocado oil, salad oil, canola oil, fish oil, beef tallow, lard, chicken fat, or MCT (medium-chain triglyceride), diglyceride, hydrogenated oil, transesterified oil, milk fat, and ghee. Among them, a liquid edible oil/fat, such as sesame oil, olive oil, rapeseed oil, soybean oil, milk fat, and sunflower oil, has an effect of enhancing the smoothness of the emulsified seasoning and is more preferred for more effectively using the present invention. In addition, although the edible oil/fat may be the oil/fat contained in the foodstuffs of the emulsified seasoning, it is preferred to add extracted and purified oil/fat in addition to the foodstuffs because it makes it easy to feel richness. The amount of the extracted and purified oil/fat to be added is preferably 10 mass% or more, more preferably 30 mass% or more, based on the total amount of oil/fat.

In addition, when the edible oil/fat in the composition has an unsaturated fatty acid proportion (total proportion of monovalent unsaturated fatty acid and multivalent unsaturated fatty acid) higher than the saturated fatty acid proportion, size reduction treatment can be efficiently performed, and such a proportion is therefore preferred. It is more preferable that the unsaturated fatty acid proportion is higher than twice the saturated fatty acid proportion.

Examples of the food whose raw ingredient is an edible oil/fat include butter, margarine, shortening, fresh cream, and soymilk cream (for example, "Ko-Cream" (registered trademark) available from Fuji Oil Co., Ltd.). In particular, foods having physical properties as a liquid can be conveniently used. Two or more of these edible oils/fats, and foods made from such oils/fats may be used in any proportion.

When the weight proportion of the total content of oil/fat (i.e., the total content of oil/fat including not only the oil/fat mixed at the time of preparing the composition but also the oil/fat contained in the fine food particles and other optional ingredients) in the emulsified seasoning to the total amount of the seasoning in the present invention is less than 10 mass%, quality that makes oil/fat separation difficult to occur in the refrigerated state can be obtained even if the present invention is not used. Accordingly, the present invention is advantageous when the total content of oil/fat in the seasoning is 10 mass% or more, further advantageous when the total content is 15 mass% or more, and most advantageous when the total content is 20 mass% or more. In addition, although the principle of emulsification of the emulsified seasoning of the present invention may be any emulsion, such as O/W emulsification, W/O emulsification, and W/O/W emulsification, O/W-type emulsification is preferred. In order to prepare an O/W-type emulsified seasoning, the total proportion of oil/fat is preferably 60 mass% or less and further preferably 50 mass% or less. The proportion of the total oil/fat content in a composition can be measured by analyzing the composition by, for example, a method for measuring "lipid" defined by Japanese Agricultural Standard Law (JAS Law). Although an appropriate measuring method can be used depending on the characteristics of the composition, for example, a method for measuring "oil/fat content" defined in the "Japanese Agricultural Standard for Dressing" can be used.

The emulsified seasoning of the present invention contains 20 mass% or more and 80 mass% or less of water. The content of water in the emulsified seasoning is preferably 25 mass% or more and further preferably 30 mass% or more. In addition, it is preferably 70 mass% or less and further preferably 60 mass% or less. The content of water in the emulsified seasoning of the present invention refers to the weight proportion of the total content of water in the composition (i.e., total water content including not only the water mixed at the time of preparing the seasoning but also the water contained in the food and other optional ingredients) to the total amount of the composition. The content of water in the whole composition can be measured by analyzing the composition by, for example, a method for measuring "water" defined by Japanese Agricultural Standard Law (JAS Law). Although an appropriate measuring method can be used depending on the characteristics of the composition, for example, a method for measuring "water" in "semi-solid dressing and emulsified liquid dressing" defined in the "Japanese Agricultural Standard for Dressing" can be used.

The solid content in an emulsified seasoning of the present invention refers to the weight of the precipitate fraction obtained by sufficiently removing the supernatant separated by centrifugation. Since oil/fat and water are partially taken into the precipitate fraction, the total amount of solid content refers to the total weight of these ingredients taken into the precipitate fraction and the foods. The solid content in the emulsified seasoning may be 10 mass% or more and 98 mass% or less. A solid content of less than 10 mass% is not preferable because such a solid content does not impart sufficient refrigeration resistance to the seasoning. Accordingly, the solid content is preferably 10 mass% or more, further preferably 15 mass% or more, and most preferably 20 mass% or more. In contrast, a solid content of higher than 98 mass% is not preferable because such a solid content gives quality that makes eating difficult. Accordingly, the solid content is preferably 98 mass% or less, further preferably 90 mass% or less, and most preferably 80 mass% or less.

The solid content in a composition of the present invention can be measured by, for example, subjecting an arbitrary amount of the composition to centrifugation at 15,000 rpm for 1 minute, sufficiently removing the supernatant, and measuring the weight of the precipitation fraction. When the proportion of the weight of the beans or nuts to the total amount of the solid content ([the solid content derived from beans and nuts]/[the solid content]) is 30 mass% or more, the effects of the present invention are more strongly expressed. Accordingly, such a proportion is preferred, and a proportion of 50 mass% or more is further preferred.

Although the principle thereof is unclear, the seasoning of the present invention pulverized until the viscosity value measured with a B-type viscometer at 20°C becomes 4,000 mPa·s or more can have improved stability during chilled storage, and the viscosity is more preferably 5,000 mPa·s or more, further preferably 7,000 mPa·s or more, and most preferably 8,000 mPa·s or more. To provide a hypothesis of the mechanism, there is a possibility that in the process of reducing the water content of beans or nuts, the proteins and fibers derived from the beans or nuts take a porous structure to increase the affinity between the oil/fat and water, resulting in improvement in the stability of the emulsified seasoning during chilled storage. A viscosity value of less than 4,000 mPa·s measured with a B-type viscometer at 20°C is not preferable, because the amount of oil/fat separation based on the total amount of the seasoning when left to stand at 4°C for 72 hours becomes higher than 30 mass%. A viscosity value of higher than 80,000 mPa·s measured after size reduction treatment with a B-type viscometer at 20°C is not preferable either, because the efficiency of the size reduction treatment is deteriorated. Accordingly, the viscosity value measured at 20°C is preferably 80,000 mPa·s or less, preferably 45,000 mPa·s or less, preferably 30,000 mPa·s or less, and most preferably 20,000 mPa·s or less. In the present invention, the viscosity value simply mentioned as "viscosity at 20°C" represents a value measured with a rotational viscometer and can be measured in accordance with an ordinary method with a B-type viscometer (for example, "B-II" manufactured by Toki Sangyo Co., Ltd.). Specifically, for example, an appropriate amount of a seasoning is filled in a measurement container of a B-type viscometer. After adjustment to 20°C, the container is set to the B-type viscometer, and the viscosity is measured at an appropriate rotation speed by using a rotor suitable for the viscosity to be measured. More specifically, in the measurement, paying attention to the measurement upper limit, a measurement of a sample adjusted to 20°C is obtained at an appropriate rotation speed (6 to 60 rpm) by using a rotor (No. 1 to No. 4), and the measurement is multiplied by the conversion multiplier corresponding to the used rotor and rotation speed to determine the value of "viscosity (20°C)".

In the measurement, a combination of the rotor and the rotational speed is selected such that the estimated viscosity of a measurement sample is close to a full scale of the upper limit of the measurement conducted from the rotor and the rotational speed. When the viscosity is unclear at all, the viscosity can be measured by sequentially changing the setting of the viscosity range from the maximum viscosity range (rotor: No. 4, rotational speed: 6 rpm) to a lower viscosity range. For example, with a rotor of No. 3 at a rotational speed of 60 rpm, a viscosity can be measured up to 2,000 mPa·s, and the measurement is multiplied by a conversion multiplier 20 to obtain the "viscosity (20°C)" value.

When the modal diameter of the emulsified seasoning of the present invention after ultrasonication is 100 µm or less, the stability during chilled storage is improved. The modal diameter is more preferably 50 µm or less, more preferably 15 µm or less, and most preferably 10 µm or less. If the modal diameter is less than 0.3 µm, the productivity is deteriorated, and ultrafine particles smaller than this value are easily taken into a living body, which may cause allergy. Accordingly, a modal diameter of 0.3 µm or more is efficient and safe in manufacturing, a modal diameter of 1.0 µm or more is further efficient and safe, and a modal diameter of 2.0 µm or more is most efficient and safe.

The particle diameters in the present invention all refer to those measured on a volume basis, and the measured value of particle diameter represents the result obtained by analyzing a sample after ultrasonication (the ultrasonication disrupts clusters formed from multiple fine particles, and the measured value tends to be several times to several tens of times smaller to give a value that is completely different from the particle diameter measured before ultrasonication), unless otherwise limited.

The modal diameter refers to, in a particle size distribution of each channel obtained by measuring the emulsified seasoning with a laser diffraction particle size distribution analyzer, the particle diameter of the channel having the largest particle frequency percent. If there are multiple channels having exactly the same particle frequency percent, the particle diameter of the channel having the smallest particle diameter among them is adopted. If the particle size distribution is a normal distribution, the modal diameter coincides with the median diameter. If the particle size distribution has a bias, in particular, if the particle size distribution has multiple peaks, the modal diameter is greatly different from the median diameter. The measurement of the particle size distribution of a sample with a laser diffraction particle size distribution analyzer can be performed by, for example, the following method.

As the laser diffraction particle size distribution analyzer, for example, Microtrac MT3300 EXII System available from MicrotracBEL Corp. can be used. Distilled water is used as the solvent for the measurement, and DMS2 (Data Management System version 2, MicrotracBEL Corp.) can be used as the measurement application software. If distilled water is not used as the measurement solvent, the characteristics of the particles in the seasoning are modified and cannot be appropriately used as an indicator of the present invention. Accordingly, distilled water is necessarily used as the solvent for the measurement. In the measurement, the cleaning button of the measurement application software is pressed to perform cleaning, the set zero button of the software is then pressed to perform zero adjustment, and a sample can be directly charged until the concentration becomes within an appropriate range by sample loading. After adjustment of the concentration within the range, for a sample not to be subjected to ultrasonication, the result of laser diffraction at a flow rate of 60% and a measurement time of 10 seconds is defined as a measurement. In a sample to be subjected to ultrasonication, the ultrasonication button of the software is pressed to perform ultrasonication at 40 kHz and 40 W for 180 seconds, and defoaming is performed three times. Thereafter, the results of laser diffraction at a flow rate of 60% and a measurement time of 10 seconds is defined as a measurement.

The measurement can be performed under conditions: distribution display: volume, particle refractive index: 1.60, solvent refractive index: 1.333, measurement upper limit (µm): 2000.00 µm, and measurement lower limit (µm): 0.021 µm.

The particle size distribution for each channel (CH) in the present invention can be measured by using the particle diameter for each measurement channel shown in Table 1 as a standard. The particle diameter specified for each channel is also referred to as "particle diameter of xx channel". The frequency of particles not larger than the particle diameter specified for each channel and larger than the particle diameter specified for the channel with one larger number (in the maximum channel in the measurement range, the measurement lower limit particle diameter) is measured for each channel, and the particle frequency percent of each channel (also referred to as "particle frequency percent of xx channel") can be determined by using the total frequency of all channels within the measurement range as the denominator. For example, the particle frequency percent of one channel represents the frequency percent of particles of 2,000.00 µm or less and larger than 1826.00 µm.

In the emulsified seasoning of the present invention, if pulverization is performed until the maximum particle diameter before ultrasonication is decreased to 30 µm or less, the structure of foodstuffs is destroyed, and undesirable flavor tends to be provided. Accordingly, a method for performing pulverization such that the maximum particle diameter before ultrasonication is larger than 30 µm is preferred. Furthermore, a method for performing pulverization such that the maximum particle diameter before ultrasonication is larger than 100 µm is more preferred.

The maximum particle diameter can be measured by, for example, the following method. That is, with regard to the particle size distribution for each channel obtained by measuring the emulsified seasoning with a laser diffraction particle size distribution analyzer, the particle diameter of the channel having the largest particle diameter among the channels in which the particle frequency percent is recognized can be defined as the maximum particle diameter.

In addition, in the particle diameter of the seasoning of the present invention, the median diameter after ultrasonication is further preferably 70 µm or less. The median diameter is more preferably 50 µm or less, more preferably 20 µm or less, more preferably 15 µm or less, and most preferably 10 µm or less. In contrast, if the median diameter is less than 0.3 µm, the productivity is deteriorated, and ultrafine particles smaller than this value are easily taken into a living body, which may cause allergy. Accordingly, a median diameter of 0.3 µm or more is efficient and safe in manufacturing, and a median diameter of 1.0 µm or more is further efficient and safe.

The median diameter represents the numerical value of the diameter at which accumulated values of particle frequency percent on the larger side and the smaller side are equal to each other when the particle size distribution obtained by measuring the emulsified seasoning with a laser diffraction particle size distribution analyzer is divided into two based on the particle diameter, and is also denoted as d50.

In addition, in the particle diameter of the seasoning of the present invention, the 90% integrated diameter (d90) after ultrasonication is preferably 80.0 µm or less, further preferably 60.0 µm or less, further preferably 50 µm or less, further preferably 30 µm or less, and most preferably 10 µm or less. In contrast, if the 90% integrated diameter (d90) is less than 0.4 µm, the productivity is deteriorated, and ultrafine particles smaller than this value are easily taken into a living body, which may cause allergy. Accordingly, a 90% integrated diameter of 0.4 µm or more is efficient and safe in manufacturing, and a 90% integrated diameter of 4.0 µm or more is most efficient and safe. The 90% integrated diameter represents the numerical value of the diameter at which the ratio of accumulated values of particle frequency percent on the larger side and the smaller side is 1:9 when the particle size distribution obtained by measuring the emulsified seasoning with a laser diffraction particle size distribution analyzer is divided into two based on the particle diameter, and is also denoted as d90.

In the seasoning of the present invention, in addition to the above-mentioned modal diameter after ultrasonication and/or median diameter, the arithmetic standard deviation is 60 µm or less, which is preferable because the discharged seasoning surface is even better. The arithmetic standard deviation is more preferably 46 µm or less, particularly preferably 31 µm or less, particularly preferably 15 µm or less, and most preferably 10 µm or less. Furthermore, the proportion of "arithmetic standard deviation/modal diameter" is preferably 10 or less and further preferably 9 or less.

In a seasoning having extremely low arithmetic standard deviation, the manufacturing efficiency is extremely low. Accordingly, an arithmetic standard deviation of 1 µm or more is efficient for manufacturing, 1.8 µm or more is further efficient.

The seasoning of the present invention preferably contains specific amino acid and/or imino acid. Specifically, the total content of phenylalanine, aspartic acid, glycine, and proline is preferably 500 mg/100 g or more. The content of these amino acids and/or imino acid can be adjusted by the food as a raw ingredient and a food additive.

The seasoning used in the present invention preferably contains specific minerals. Specifically, the total content of potassium and magnesium is preferably 25 mg/100 g or more. The content of these minerals can be adjusted by the food as a raw ingredient and a food additive.

In the seasoning used in the present invention, due to rise in health consciousness in recent years, a lower content of cholesterol is preferred. Specifically, the content of cholesterol is preferably 50 mg/100 g or less, more preferably 25 mg/100 g or less, further preferably 10 mg/100 g or less, and most preferably 5 mg/100 g or less. There exists egg yolk-free mayonnaise in which the content of cholesterol is simply lowered. However, there was not a seasoning prepared by treating foods with a high-shear force under pressurized conditions for a short period of time like the present invention.

The seasoning of the present invention may contain various foods and food additives that are used in common foods within a range satisfying the constitutional requirements as necessary. Examples thereof include soy sauce, miso, alcohols, sugars (glucose, sucrose, fructose, high-fructose corn syrup, and high-glucose corn syrup), sugar alcohols (xylitol, erythritol, and maltitol), artificial sweeteners (sucralose, aspartame, saccharin, and acesulfame K), minerals (such as calcium, potassium, sodium, iron, zinc, and magnesium, and salts thereof), flavors, pH adjusters (such as sodium hydroxide, potassium hydroxide), cyclodextrin, antioxidants (vitamin E, vitamin C, tea extract, green coffee bean extract, chlorogenic acid, spice extract, caffeic acid, rosemary extract, vitamin C palmitate, rutin, quercetin, bayberry extract, and sesame extract). Although emulsifiers (glycerin fatty acid ester, acetic acid monoglyceride, lactic acid monoglyceride, citric acid monoglyceride, diacetyl tartaric acid monoglyceride, succinic acid monoglyceride, polyglyceryl fatty acid ester, polyglyceryl condensed linoleic acid ester, quillaja extract, soybean saponin, tea seed saponin, and sucrose fatty acid ester), colorants, and thickening stabilizers (for example, xanthan gum, gellan gum, guar gum, and gum arabic) may also be contained, due to the recent rise in nature orientation, the quality in which so-called emulsifier and/or colorant and/or thickening stabilizer (for example, those described as "colorant", "thickening stabilizer", and "emulsifier" in "Table of food additive names for indication" of Food Additives Indication Pocket Book (2011 edition)) are not contained is desirable. The quality in which food additives in general (for example, substances described in Food Additives Indication Pocket Book (2011 edition) used as food additives) are not contained is most desirable.

In addition, it is preferable not to contain eggs and/or egg yolks and processed products thereof, because they become allergens.

In manufacturing the emulsified seasoning of the present invention, the raw ingredients are preferably subjected to size reduction treatment in a crushing solvent. Any pulverization treatment or size-reduction method can be used in the present invention as long as the food can be treated by a high-shear force under pressurized conditions for a short period of time. Any of devices such as a blender, a mixer, a mill, a kneader, a crusher, a pulverizer, or an attritor may be used; either dry grinding or wet grinding may be performed; and any of high-temperature grinding, normal-temperature grinding, and low-temperature grinding may be performed. For example, as a dry pulverizer, a medium stirring mill such as a dry bead mill or a ball mill (tumbling type, vibration type, etc.), a jet mill, a high-speed rotation impact mill (such as pin mill), a roll mill, or a hammer mill can be used. For example, as a wet pulverizer, a medium stirring mill such as a bead mill or a ball mill (such as a tumbling, vibration, or planetary mill), a roll mill, a colloid mill, a star-burst, or a high-pressure homogenizer can be used. For the emulsified seasoning in the wet-pulverized state, a colloid mill, a medium stirring mill (a ball mill or a bead mill), or a high-pressure homogenizer can be more suitably used. For example, a high-pressure homogenizer or a medium stirring mill can be preferably used. Specifically, disruption through one-path treatment (usually, the treatment time is less than 30 minutes) with a bead mill pulverizer using beads having a particle diameter of 2 mm or less under pressurized conditions in which the outlet pressure is higher than the normal pressure by 0.01 MPa or more (the pressure is preferably increased by 0.01 MPa or more and 1 MPa or less, further preferably by 0.02 MPa or more and 0.50 MPa or less, and the treatment under pressurization is preferably performed before and after the shearing treatment) is preferred because the heat resistance of the emulsified seasoning during heat-cooking is considerably enhanced, in addition to the stability of the emulsified seasoning during chilled storage. In an ordinary emulsified seasoning, due to its characteristics, demulsification occurs quickly during heat-cooking to cause separation into an oil phase and an aqueous phase. However, the emulsified seasoning of the present invention subjected to size reduction treatment under pressurized conditions has industrially advantageous characteristics that separation into an oil phase and an aqueous phase does not occur during heat-cooking. Although the method for manufacturing the pressurized conditions in which the pressure is higher than the normal pressure at the size reduction treatment for manufacturing an emulsified seasoning of the present invention may be any method, in order to preferably obtain pressurized conditions with a medium stirring mill (especially a bead mill pulverizer), a method for performing treatment while adjusting the pressurized conditions by installing a filter with an appropriate size at the treatment outlet and changing the feed rate of the contents is preferred because shearing treatment can be performed in a state maintaining the pressurized conditions in the pulverization chamber, and the size reduction treatment is preferably performed at a pressurized state to 0.01 MPa or more, further preferably 0.02 MPa or more, for most of the treatment time. In the case of performing the treatment with a medium stirring mill, the viscosity value of the contents before the treatment measured with a Bostwick viscometer (measurement temperature: 20°C) is 28.0 cm or less in 1 second, which is preferable because the pressure can be easily adjusted. Specifically, measurement of the viscosity with a Bostwick viscometer can be performed by using a KO-type Bostwick viscometer (manufactured by Fukaya Iron Works Co., Ltd., trough length: 28.0 cm, the Bostwick viscosity, i.e., flow-down distance of a sample in the trough is 28.0 cm at the maximum). The viscosity value can be measured with a Bostwick viscometer by placing the device horizontally, using a level at the time of measurement, closing the gate, then filling the reservoir with a sample adjusted to a predetermined temperature to the full volume, and pressing down the trigger for opening the gate and at the same time starting measurement of time to measure the flow-down distance of the ingredient in the trough at the time when a predetermined time has elapsed. If the pressurized conditions for treating using a medium stirring mill are too severe, the equipment may be damaged. Accordingly, when the treatment is performed by using a medium stirring mill, the size reduction treatment is preferably performed at 1.0 MPa or less, further preferably 0.50 MPa or less, and most preferably 0.40 MPa or less.

In addition, treatment under pressurized conditions can be preferably performed by size reduction treatment with a high-pressure homogenizer, and an emulsified seasoning having high heat resistance during heat-cooking can be obtained. Further suitable treatment is possible by performing medium stirring milling before the treatment with a high-pressure homogenizer or performing medium stirring milling after the treatment with a high-pressure homogenizer. The high-pressure homogenizer may be any disperser that can perform shearing treatment under conditions of applying a pressure of 1 MPa or more. For example, PANDA 2K homogenizer (manufactured by Niro Soavi S.P.A.), Cavitron (manufactured by Eurote), or LAB 2000 (manufactured by SMT Co., Ltd.) can be used. As treatment conditions, for example, the size reduction treatment is preferably performed in a state where the pressure is adjusted to 0.01 MPa or more, further preferably 0.02 MPa or more, and the size reduction treatment can be performed by implementing high-pressure homogenizing treatment single or multiple times in a state where the pressure is adjusted to 50 MPa or more. In the size reduction treatment described above, the food is preferably pulverized in a crushing solvent. If the pressurized conditions are too severe, the equipment may be damaged. Accordingly, in the treatment using a high-pressure homogenizer, the upper limit of the pressure in the size reduction treatment is preferably 200 MPa or less. Accordingly, the present invention can adopt a size reduction treatment method characterized in that the majority of size reduction treatment (the time is longer than half of the sample treatment time) is performed under a pressurized condition of 0.01 MPa or more and 200 MPa or less.

In particular, when the crushing solvent contains water, it is advantageous to perform size reduction treatment with the water content in the food being lower than the water content of the crushing solvent, which tends to increase the value and the chroma, which serves to adjust the value and the chroma in the range of the present invention. Specifically, a dried food is preferably subjected to size reduction treatment using an oil/fat or water as the crushing solvent. In particular, if a food with a hot taste (such as mustard) is subjected to medium stirring milling in a crushing solvent, since the hot taste is excessively enhanced, such a food is preferably separately size-reduced and is added after medium stirring milling. The food-containing solvent in which a food is contained in an oil/fat or water before size reduction treatment preferably has a viscosity at 20°C of 20 Pa·s or less. When the viscosity is 8 Pa·s or less, the size reduction treatment efficiency is further increased, and such a viscosity is advantageous.

In particular, it is preferable to employ a pulverizing method using a wet bead mill because it provides a quality of high stability with almost no oil separation when the emulsified seasoning is left to stand, compared with other treatment methods. The principle thereof is unclear, but it is assumed that this is because the particle state of the fine food particles is suitably changed by bead milling. Although the conditions for wet bead milling, such as the bead size and packing rate, outlet mesh size, feed rate of raw ingredient slurry, mill rotational strength, and the system of single pass (one mass) or multiple pass (circulation), may be appropriately selected and adjusted in accordance with the sizes and properties of the foodstuffs and the targeted properties of the emulsified seasoning, one pass treatment is preferable, and the treatment time is further preferably 1 second or more and 90 minutes or less, most preferably 3 seconds or more and 60 minutes or less. Since the effect is plateaued when the treatment time exceeds 15 minutes, a treatment time of 15 minutes or less is most efficient. The treatment time in the present invention refers to the time for shearing the sample to be treated. For example, in a bead mill pulverizer having a pulverization chamber volume of 100 mL and a void rate of 50% excluding the bead volume and allowing the treatment solution to be injected, when a sample is subjected to one pass treatment at a feed rate of 200 mL/min without circulating the sample, since the empty volume in the pulverization chamber is 50 mL, the sample treatment time is 50/200 = 0.25 minutes (15 seconds). In addition, it is preferable to roughly pulverize the foodstuffs in advance with a jet mill, a pin mill, a stone mill pulverizer, or the like as pretreatment and then perform size reduction treatment. Although the principle is unclear, when foodstuff powder having a median diameter of 100 µm or more and 1000 µm or less is subjected to size reduction treatment, the adhesion to the object is further enhanced, and such treatment is further preferred. In the bead mill treatment, the material of the beads and the material of the bead mill inner cylinder are preferably the same, and the materials are further preferably both a zirconia compound.

Although the principle is unclear, the seasoning of the present invention has a property of enhancing both the heat resistance and the stability during chilled storage by performing size reduction treatment of a liquid mixture of beans or nuts having a water content of 50 mass% or less, an oil/fat, an organic acid, and water with an arbitrary proportion until the viscosity value measured with a B-type viscometer (temperature: 20°C) becomes 4,000 mPa·s or more. In particular, the property is notably recognized by performing the size reduction treatment with a medium stirring mill, a high-pressure homogenizer, or a colloid mill. Accordingly, an emulsified seasoning of which emulsification is inherently unstable at non-normal temperatures can be imparted with high emulsion stability during both chilled storage and heat-cooking by the present invention to provide an emulsified seasoning having industrially very favorable characteristics. Here, for example, when a medium stirring mill is used for pulverization, as the treatment proceeds, the viscosity (at 20°C) of the seasoning increases, but the modal diameter after ultrasonication decreases. Thus, there is a relationship in which one must be sacrificed by pursuing the other. That is, in order to simultaneously satisfy the viscosity range (at 20°C) and the modal diameter after ultrasonication required by the present invention, it is not enough simply to aimlessly perform the size reduction treatment, and a technological idea of simultaneously adjusting the viscosity (at 20°C) and the modal diameter after ultrasonication within specific ranges is indispensable. Although the principle is unclear, size reduction treatment under pressurized conditions serves to exhibit a favorable effect of further improving the heat resistance and/or the stability during chilled storage. Accordingly, the present inventors focused on that size reduction treatment in the method for manufacturing the seasoning of the present invention serves to improved heat resistance, improved stability during chilled storage, and unknown attributes of the seasoning, and also noticed that the emulsified seasoning is suitable for use in new applications. As such, alternative aspects of the present invention include the following embodiments.
<1> A method for improving heat resistance and/or stability during chilled storage of an emulsified seasoning, the method including the following steps (a) and (b):
   (a) a step of preparing a liquid mixture containing beans or nuts having a water content of 50 mass% or less, an oil/fat, an organic acid, and water and adjusted to have a solid content of 10 mass% or more and 98 mass% or less, a total content of the oil/fat of 10 mass% or more and 60 mass% or less, and a water content of 20 mass% or more and 80 mass% or less; and
   (b) a step of performing size reduction treatment until the liquid mixture has a modal diameter of 0.3 µm or more and 100 µm or less after ultrasonication and a viscosity value of 4,000 mPa·s or more measured with a B-type viscometer at 20°C.
<2> The method for improving heat resistance and/or stability during chilled storage of an emulsified seasoning according to <1>, where the majority of the size reduction treatment is performed under a pressurized condition of 0.01 MPa or more.
<3> An emulsified seasoning for chilled storage, comprising fine food particles of beans or nuts, an oil/fat, an organic acid, and water, where
   (1) the solid content is 10 mass% or more and 98 mass% or less;
   (2) the total content of the oil/fat is 10 mass% or more and 60 mass% or less;
   (3) the modal diameter is 0.3 µm or more and 100 µm or less;
   (4) the water content is 20 mass% or more and 80 mass% or less; and
   (5) the viscosity value measured with a B-type viscometer at 20°C is 4,000 mPa·s or more.
<4> An emulsified seasoning for chilled storage and heat-cooking, comprising fine food particles of beans or nuts, an oil/fat, an organic acid, and water, where
   (1) the solid content is 10 mass% or more and 98 mass% or less;
   (2) the total content of the oil/fat is 10 mass% or more and 60 mass% or less;
   (3) the modal diameter is 0.3 µm or more and 100 µm or less;
   (4) the water content is 20 mass% or more and 80 mass% or less; and
   (5) the viscosity value measured with a B-type viscometer at 20°C is 4,000 mPa·s or more.

### Examples

The present invention will now be more specifically described based on Examples, but these are merely examples for convenience of explanation, and the present invention is not limited to these Examples in any manner.

### [Method for preparing emulsified seasoning]

Emulsified seasonings were prepared as follows.

### [Method for preparing emulsified seasoning samples]

Liquid mixtures of raw ingredients shown in Tables 2 and 3 were prepared, and size reduction treatment was performed until conditions shown in Table 4 were given. Cabbage was boiled and then made into paste with a mixer. The fried onion was a commercial product manufactured by Nihonnousankako Corporation. Soybean and green soybean as beans were dried to adjust the water content to 2.6 mass% and 8.0 mass%, respectively, and these were then pulverized to give coarse powders. Almond as a nut is roasted to a water content of 5.0 mass% and was then pulverized to give a coarse powder. Olive oil, canola oil, salt, pure apple vinegar, white wine vinegar, mustard powder, kelp extract, shiitake mushroom stock, pumpkin powder, potato powder, amazake (rice liquefied by enzyme treatment), and citric acid were commercial products.

The above-mentioned raw ingredients were sufficiently stirred with a table mixer until the appearance became substantially uniform and were subjected size reduction treatment using a medium stirring mill (wet bead mill pulverizer). In the treatment with a medium stirring mill (wet bead mill), a filter of 0.3 mm was installed at the outlet of the wet bead mill pulverizer, the pressurized conditions were adjusted such that the differential pressure, relative to the atmospheric pressure defined as "0", in the pulverization chamber is 0.01 MPa or more immediately after the start of treatment by appropriately changing the feed rate, and the size reduction treatment was performed under constant conditions until the completion of the treatment. Samples of Examples 1 to 12 and Comparative Examples 1 and 2 were given by referring to the B-type viscosity (after size reduction treatment) at 20°C of each sample after the size reduction treatment.

In addition, the above-mentioned raw ingredients were sufficiently stirred with a table mixer until the appearance became substantially homogeneous and were subjected to size reduction treatment by using a high-pressure homogenizer, to give samples of Examples 13 to 16 by referring to the B-type viscosity (after size reduction treatment) at 20°C of each sample after the size reduction treatment. In the treatment with the high-pressure homogenizer, high-pressure homogenizing treatment using LAB 2000 (manufactured by SMT Co., Ltd.) under a pressure of 80 MPa was implemented once.

### (1) Particle size distribution (modal diameter, maximum particle diameter)

Particle size distribution of each emulsified seasoning was measured by using Microtrac MT3300 EX2 system of MicrotracBEL Corp. as a laser diffraction particle size distribution analyzer. Distilled water was used as the solvent for the measurement, and DMS2 (Data Management System version 2, MicrotracBEL Corp.) was used as the measurement application software. In the measurement, the cleaning button of the measurement application software was pressed to perform cleaning, the set zero button of the software was then pressed to perform zero adjustment, and a sample was directly charged until the concentration became within an appropriate range by sample loading. After adjustment of the concentration within the range, in a sample not to be subjected to ultrasonication, the result of laser diffraction at a flow rate of 60% and a measurement time of 10 seconds was defined as a measurement, and in a sample to be subjected to ultrasonication, the ultrasonication button of the software was pressed to perform ultrasonication at 40 kHz and 40 W for 180 seconds, defoaming was performed three times. Thereafter, the result of laser diffraction at a flow rate of 60% and a measurement time of 10 seconds was defined as a measurement.

The measurement was performed under conditions: distribution display: volume, particle refractive index: 1.60, solvent refractive index: 1.333, measurement upper limit (µm): 2000.00 µm, and measurement lower limit (µm): 0.021 µm.

The particle size distribution for each channel in the present invention was measured by using the particle diameter for each measurement channel shown in Table 1 as a standard. The frequency of particles not larger than the particle diameter specified for each channel and larger than the particle diameter specified for the channel with one larger number (in the maximum channel in the measurement range, the measurement lower limit particle diameter) was measured for each channel, and the particle frequency percent of each channel was determined by using the total frequency of all channels within the measurement range as the denominator. Specifically, the particle frequency percent of each of 132 channels was measured. Regarding the measurement results, the particle diameter of the channel having a highest particle frequency percent was defined as the modal diameter. If there are multiple channels having exactly the same particle frequency percent, the particle diameter of the channel having the smallest particle diameter among them was adopted as the modal diameter. The particle diameter of the channel having the largest particle diameter among the channels in which the particle frequency percent was recognized was adopted as the maximum particle diameter.

**[Table 1]**

| Channel | Particle diameter (µm) | Channel | Particle diameter (µm) | Channel | Particle diameter (µm) | Channel | Particle diameter (µm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### (2) Viscosity measured at 20°C with B-type viscometer

The viscosity of a liquid seasoning was measured with a B-type viscometer ("B-II" manufactured by Toki Sangyo Co., Ltd.). Specifically, an appropriate amount of a seasoning was filled in a measurement container of a B-type viscometer. After adjusting to 20°C, the container was set to the B-type viscometer, and the viscosity was measured at an appropriate rotation speed by using a rotor suitable for the viscosity to be measured. Specifically, the rotors used were No.2 to No.4, the rotation speeds were 60 rpm to 6 rpm, and the measurement was performed by a combination of a rotor and a rotation speed selected from the above such that the viscosity would be close to the full scale.

### (3) Chilled storage at 4°C for 72 hours, and (4) Heat-cooking

Emulsified seasoning samples (each 25 mL) prepared in Examples and Comparative Examples were filled in 50-mL conical tubes and were left to stand at 4°C for 72 hours, and the amount of oil/fat separation based on the total amount of the seasoning was evaluated visually. In addition, each sample was cooked with heat (heated on a frying pan over an open fire for 1 minute), and the degree of oil/fat separation of each seasoning was evaluated. In these tests, the degree of oil/fat separation in each of these tests was evaluated according to the following five-grade system; 5: low oil/fat separation, which is preferable, 4: slightly low oil/fat separation, which is slightly preferable, 3: oil/fat separation perceived but tolerable, 2: slightly conspicuous oil/fat separation, which is slightly unpreferable, and 1: conspicuous oil/fat separation, unpreferable. Each evaluation item was evaluated by a system selecting one number closest to the evaluation by the panelist. Evaluation results were totalized from the arithmetic mean value of scores of ten panelists.

The training of the sensory panelists was the following discrimination training A) to C), and panelists selected were those particularly having excellent results, having a wide variety of knowledge through product development experience and regular participation to evaluation of the quality of foods, such as taste, appearance, and oil/fat separation, and being capable of absolutely evaluating each sensory test item. Objective sensory tests were performed by a total of ten panelists.
A) A taste discrimination test for five flavors (sweetness: taste of sugar, sourness: taste of tartaric acid, umami: taste of sodium glutamate, saltiness: taste of sodium chloride, and bitterness: taste of caffeine) by producing aqueous solutions of these ingredients having concentrations close to the respective threshold levels and accurately discriminating the respective samples of these tastes from the aqueous solution samples of these flavors and two distilled water samples, i.e., seven samples in total;
B) A concentration difference discrimination test for accurately discriminating concentration differences of sodium chloride aqueous solutions and acetic acid aqueous solutions having slightly different five concentrations; and
C) A three-point discrimination test for accurately discriminating the soy sauce from company B among a total of three samples consisting of two soy sauce from company A and one soy sauce from company B.

In the examples, "%" represents "mass%" unless otherwise specified.

The results are partially shown in Table 4. Incidentally, in all examples, the maximum particle diameter before ultrasonication was larger than 100 µm.

In Comparative Examples, as an example of commercially available soybean-containing mayonnaise, a commercially available mayonnaise-like seasoning for vegetarians was subjected to analysis as in Examples. The modal diameter after ultrasonication was larger than the range as specified in the present invention, and the oil/fat separation during chilled storage and heating with a range was rated as "1" in all samples, unlike the present invention.

In each of Examples 1 to 16, a sample containing 2-mm square cut dice onion and corn grains was manufactured, where (since the sizes exceed the upper limit of the particle size distribution measurement conditions of the present invention, these samples are not suitable for measurement) the measurements, such as the modal diameter after ultrasonication and the viscosity, were not affected by the dice onion and corn grains, and was subjected to the sensory evaluation. The results were not changed.

In addition, samples were manufactured under the same conditions except that size reduction treatment was performed by adjusting the differential pressure in the pulverization chamber during the size reduction treatment to 0.01 to 0.40 MPa through adjustment of the feed rate of the wet bead mill pulverizer, and the samples were subjected to the sensory evaluation. The results were not changed.

Experimental verification was performed by replacing the dried soybean with a roasted almond powder (roasted almond processed into a powder) or amazake (rice liquefied through enzyme treatment by an ordinary method). The same effects as the case of dried soybean, such as improvement in the emulsion stability during chilled storage and heat-cooking, were obtained.

**[Table 2]**

| Examples 1 to 10 and Comparative Examples 1 and 2 | | |
|---|---|---|
| Ingredient | Unit | Amount |
| Pure apple vinegar | g | 90 |
| Kelp extract | g | 25 |
| Salt | g | 14 |
| Dried soybean (water content: 2.6 mass%) | g | 100 |
| Fried onion paste | g | 40 |
| Olive oil | g | 400 |
| Mustard powder | g | 8 |
| Water | g | balance |
| Total | g | 1000 |
| Solid content | mass% | 20 |
| Solid content derived from beans and nuts/solid content | mass% | 90 |
| Fine food particle content | mass% | 16 |
| Fine particle content derived from beans and nuts/fine food particle content | mass% | 90 |
| Total content of oil/fat | mass% | 45 |
| Water content | mass% | 40 |

| Examples 11 and 12 | | |
|---|---|---|
| Ingredient | Unit | Amount |
| White wine vinegar | g | 80 |
| Kelp extract | g | 25 |
| Salt | g | 14 |
| Dried green soybean (water content: 8.0 mass%) | g | 100 |
| Cabbage paste | g | 200 |
| Canola oil | g | 200 |
| Mustard powder | g | 7 |
| Water | g | balance |
| Total | g | 1000 |
| Solid content | mass% | 40 |
| Solid content derived from beans and nuts/solid content | mass% | 30 |
| Fine food particle content | mass% | 35 |
| Fine particle content derived from beans and nuts/fine food particle content | mass% | 50 |
| Total content of oil/fat | mass% | 20 |
| Water content | mass% | 60 |

**[Table 3]**

| Examples 13 to 16 | | |
|---|---|---|
| Ingredient | Unit | Amount |
| Pure apple vinegar | g | 90 |
| Citric acid | g | 2 |
| Shiitake mushroom stock | g | 20 |
| Salt | g | 18 |
| Roasted almond powder (water content: 5.0 mass%) | g | 20 |
| Potato powder | g | 15 |
| Pumpkin powder | g | 6 |
| Amazake (rice liquefied through enzyme treatment) | g | 130 |
| Canola oil | g | 320 |
| Mustard powder | g | 5 |
| Water | g | balance |
| Total | g | 1000 |
| Solid content | mass% | 15 |
| Solid content derived from beans and nuts/solid content | mass% | 30 |
| Fine food particle content | mass% | 8 |
| Fine particle content derived from beans and nuts/fine food particle content | mass% | 30 |
| Total content of oil/fat | mass% | 20 |
| Water content | mass% | 60 |

**[Table 4]**

| | Viscosity after size reduction treatment (mPa·s, 20°C) | Modal diameter after ultrasonication (µm) | Evaluation of separation after chilled storage | Evaluation of separation after heat-cooking |
|---|---|---|---|---|
| Comparative Example 1 | 492 | 18.500 | 1 | 1 |
| Example 1 | 4620 | 16.960 | 3 | 4 |
| Example 2 | 7340 | 16.960 | 4 | 5 |
| Example 3 | 8820 | 15.560 | 5 | 5 |
| Example 4 | 11020 | 14.270 | 5 | 5 |
| Example 5 | 15290 | 13.080 | 5 | 5 |
| Example 6 | 16440 | 12.000 | 5 | 5 |
| Example 7 | 37000 | 7.133 | 5 | 5 |
| Example 8 | 40500 | 1.060 | 5 | 5 |
| Example 9 | 15030 | 47.980 | 4 | 5 |
| Example 10 | 5030 | 95.960 | 3 | 4 |
| Comparative Example 2 | 4550 | 114.100 | 2 | 3 |
| Example 11 | 44250 | 15.560 | 5 | 5 |
| Example 12 | 76300 | 14.270 | 5 | 5 |
| Example 13 | 5100 | 44.000 | 4 | 4 |
| Example 14 | 8030 | 15.560 | 5 | 5 |
| Example 15 | 29000 | 8.482 | 5 | 5 |
| Example 16 | 79400 | 7.778 | 5 | 5 |

## Claims

1. An emulsified seasoning for chilled storage and/or heat-cooking, comprising fine food particles derived from beans or nuts having a water content of 50 mass% or less, an oil/fat, an organic acid, and water, wherein
(1) a solid content is 10 mass% or more and 98 mass% or less;
(2) a total content of the oil/fat is 10 mass% or more and 60 mass% or less;
(3) a modal diameter is 0.3 µm or more and 100 µm or less;
(4) a water content is 20 mass% or more and 80 mass% or less; and
(5) a viscosity value measured with a B-type viscometer at 20°C is 4,000 mPa·s or more.

2. The emulsified seasoning for chilled storage and/or heat-cooking according to claim 1, further comprising fine particles of vegetables other the beans or nuts.

3. The emulsified seasoning for chilled storage and/or heat-cooking according to claim 1 or 2, wherein a content of fine food particles comprising the beans or nuts is 2 mass% or more and 98 mass% or less.

4. The emulsified seasoning for chilled storage and/or heat-cooking according to any one of claims 1 to 3, wherein a content of the organic acid is 0.1 mass% or more and 2.0 mass% or less.

5. The emulsified seasoning for chilled storage and/or heat-cooking according to any one of claims 1 to 4, comprising 0.1 mass% or more and 20 mass% or less of salt.

6. The emulsified seasoning for chilled storage and/or heat-cooking according to any one of claims 1 to 5, wherein the modal diameter is 0.3 µm or more and 50 µm or less.

7. The emulsified seasoning for chilled storage and/or heat-cooking according to any one of claims 1 to 6, wherein the water content is 20 mass% or more and 70 mass% or less.

8. The emulsified seasoning for chilled storage and/or heat-cooking according to any one of claims 1 to 7, wherein the viscosity value measured with a B-type viscometer at 20°C is 4,000 mPa·s or more and 80,000 mPa·s or less.

9. The emulsified seasoning for chilled storage and/or heat-cooking according to any one of claims 1 to 8, being an emulsified seasoning for chilled storage.

10. A method for manufacturing an emulsified seasoning for chilled storage and/or heat-cooking, the method comprising the steps (a) and (b):
(a) preparing a liquid mixture containing beans or nuts having a water content of 50 mass% or less, an oil/fat, an organic acid, and water and the liquid mixture being adjusted such that a solid content being 10 mass% or more and 98 mass% or less, a total content of the oil/fat being 10 mass% or more and 60 mass% or less, and a water content being 20 mass% or more and 80 mass% or less; and
(b) performing size reduction treatment until the liquid mixture has a modal diameter of 0.3 µm or more and 100 µm or less and a viscosity value measured with a B-type viscometer at 20°C of 4,000 mPa·s or more.

11. The method for manufacturing the emulsified seasoning for chilled storage and/or heat-cooking according to claim 10, wherein a majority of the size reduction treatment is performed under a pressurized condition of 0.01 MPa or more.

12. A method for improving heat resistance and/or stability during chilled storage of an emulsified seasoning, the method comprising the following steps (a) and (b):
(a) preparing a liquid mixture containing beans or nuts having a water content of 50 mass% or less, an oil/fat, an organic acid, and water and adjusted to have a solid content of 10 mass% or more and 98 mass% or less, a total content of the oil/fat of 10 mass% or more and 60 mass% or less, and a water content of 20 mass% or more and 80 mass% or less; and
(b) performing size reduction treatment until the liquid mixture has a modal diameter of 0.3 µm or more and 100 µm or less and a viscosity value of 4,000 mPa·s or more measured with a B-type viscometer at 20°C.

13. The method for improving heat resistance and/or stability during chilled storage of an emulsified seasoning according to claim 12, wherein a majority of the size reduction treatment is performed under a pressurized condition of 0.01 MPa or more.
